**Europäisches Patentamt**

**European Patent Office**

**Office européen des brevets**

(11) Publication number : **0 487 277 A2**

# (12) EUROPEAN PATENT APPLICATION

(21) Application number : **91310602.7**

(22) Date of filing : **18.11.91**

(51) Int. Cl.⁵ : **B24B 41/00**

(30) Priority : **19.11.90 US 615181**
**04.04.91 US 680467**
**04.04.91 US 680866**

(43) Date of publication of application :
**27.05.92 Bulletin 92/22**

(84) Designated Contracting States :
**CH DE FR GB IT LI**

(71) Applicant : **CINCINNATI MILACRON-HEALD**
**CORPORATION**
**10 New Bond Street**
**Worcester Massachusetts 01606 (US)**

(72) Inventor : **Enos, Ellswoth Collard**
**55 Sherwood Hill Drive**
**Holden, Massachusetts 01520 (US)**

(74) Representative : **Lally, William**
**FORRESTER & BOEHMERT**
**Franz-Joseph-Strasse 38**
**W-8000 München 40 (DE)**

(54) **Machine, support system and method for relatively moving two objects with precision.**

(57) Two objects, typically a tool and a workpiece, are moved towards one another as the sum of the rates of motion produced by two independent drive means, the rate of approach being the difference between the rates at which the two drive means operate, whereby precision of approach of movement may be obtained.

FIG.6

EP 0 487 277 A2

This invention relates to precisely-movable supports employed, for example, to move a tool relative to a workpiece.

When first moved, or when reversing directions, tool slides are subject to the well-known "stick-slip" condition and other inertia-related phenomena, and lost motion may also occur.

The prevalent teaching of the prior art is, even in precision machinery, in order to reverse relative movement of a tool, a slide, for example the tool-carrying slide, must be reversed in its slideway.

U.S. Patent 3, 928,943 to Wirz discloses a precision wheel dresser for a grinding machine, utilizing plain dovetail slideways. One slide is movable axially of the wheel, across the wheel face, and it carries two additional slides which are coupled together and guided to move radially of the wheel. The tool, a diamond dressing nib, is mounted on one of the coupled slides for contouring the grinding wheel. The coupled slides embody a "differential screw" mechanism, where relative movement of the two is in a fixed ratio to the reference axial slide. While contouring, reverse movement of the dressing nib necessitates reversing the nib-carrying slide.

U.S. Patent 3,490,430 to Hoglund discloses a wheel dresser having antifriction slideways.

U.S. Patent 3,581,730 to Boyd, Jr. et al discloses the degree of precision involved in some grinders for producing a crowned track on a roller bearing race.

U.S. Patent 4,051,830 to Gruber, and 4,071,015 to Funke, are generally related to the topic of dressing a wheel "track face" in a bearing grinder.

U.S. Patent 3,187,468 to Grymek discloses a travelling wheelhead roll grinder, employing a cambering unit which feeds the grinding wheel in and out, radially of the rotating roll workpiece, while the wheelhead axially-traverses the roll. The wheelhead rocks in reverse directions on its trunnion way system.

The present invention obviates the disadvantages inherent in the prior art movable tool support systems, through a system for use in a precision movement device, where a pair of slides each move unidirectionally at variable rates, without reversal, during the precision movement. First and second objects are supported on respective first and second slides, and the slides are each powered with respect to a common base, and each moved in the same direction during the precision movement. The net difference in velocities is traced by the first object (for example, a tool) relative to the second object (for example, a workpiece), while a carrier means moves one of the objects transversely to the slide movement directions. When the invention is, for instance, embodied in a grinding wheel dresser, the carrier means provides a transverse feed stroke across a wheel face, defining a path length, as the dressing tool traces a contoured path. In one embodiment both the first and second slides move one object with respect to a relatively fixed second object, the slides are coupled, one dependent on the other, and moved in opposite directions during the precision movement. In another embodiment each slide is to move an object, the slides are each powered with respect to a common base, and each moved in the same direction during the precision movement.

According to the present invention, there is provided a machine comprising two machine parts and drive mechanism to cause relative movement of approach between said machine parts, characterised in that said drive mechanism comprises:

(a) first drive means operative to cause movement of approach between said machine parts; and

(b) second drive means operative to cause movement of separation between said machine parts, the rate of approach between said machine parts being the difference between the rates of operation of said first and second drive means.

There will now be given detailed descriptions, to be read with reference to the accompanying drawings, of various embodiments of the invention, which have been selected for the purposes of illustrating the invention by way of example.

In the accompanying drawings:

FIGURE 1 is a perspective view of a grinding wheel dresser unit having a dressing tool supported on linear slides.

FIGURE 2 is a top plan view taken in the direction of arrow 2 of Figure 1.

FIGURE 3 is a view showing several different wheel forms.

FIGURE 4 is a side elevational view taken in the direction of arrow 4 of Figure 1.

FIGURE 5 is a view showing a graph for the two coupled tool slides, and the grinding wheel form traced by the dressing tool with the difference in slide velocities.

FIGURE 6 is a perspective view of a travelling wheelhead roll grinder having the wheelhead supported on linear slides.

FIGURE 7 is a side elevational view of a grinding wheel dressing unit having a dressing tool mounted on rotary slides.

FIGURE 8 is a sectional view taken along the line 8-8 of Figure 7.

FIGURE 9 is a side elevational view of a travelling wheelhead roll grinder having the wheelhead mounted on rotary slides.

FIGURE 10 is a side elevational view of a grinding wheel dresser unit having rotary slides in a four-bar linkage configuration.

FIGURE 11 is a perspective view of a grinding wheel dresser unit having both a dressing tool and a grinding wheel supported on independent linear slides.

FIGURE 12 is a top plan view taken in the direction of arrow 12 of Figure 11.

FIGURE 13 is a view showing several different wheel forms.

FIGURE 14 is a side elevational view taken along the line 14-14 of Figure 11.

FIGURE 15a and 15b are views showing graphs for the tool and wheel slide velocities, in order to dress the several wheels shown in Figure 13.

FIGURE 16 is a perspective view of a travelling wheelhead roll grinder having both the wheelhead and workpiece carried on independent linear slides.

FIGURE 17 is a side elevational view of a grinding machine having both a dressing tool and a grinding wheel mounted on independent rotary slides.

FIGURE 18 is an elevational sectional view through the grinding wheel slide, taken along the line 18-18 of Figure 17.

FIGURE 19 is an elevational section through the dressing tool slide taken along the line 19-19 of Figure 17.

FIGURE 20 is a side elevational view of a travelling wheelhead roll grinder having both the wheelhead and workpiece mounted on independent rotary slides.

FIGURE 21 is a side elevational view of a travelling wheelhead roll grinder having rotary slides in a four-bar linkage configuration.

FIGURE 22 is an elevational section taken along the line 22-22 of Figure 21.

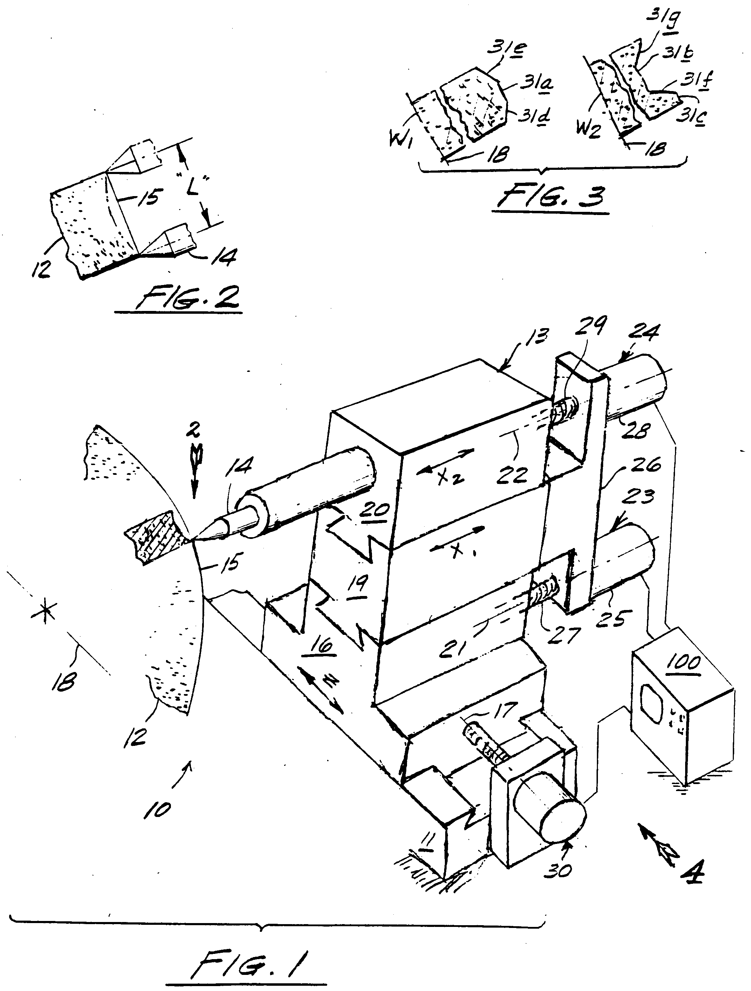

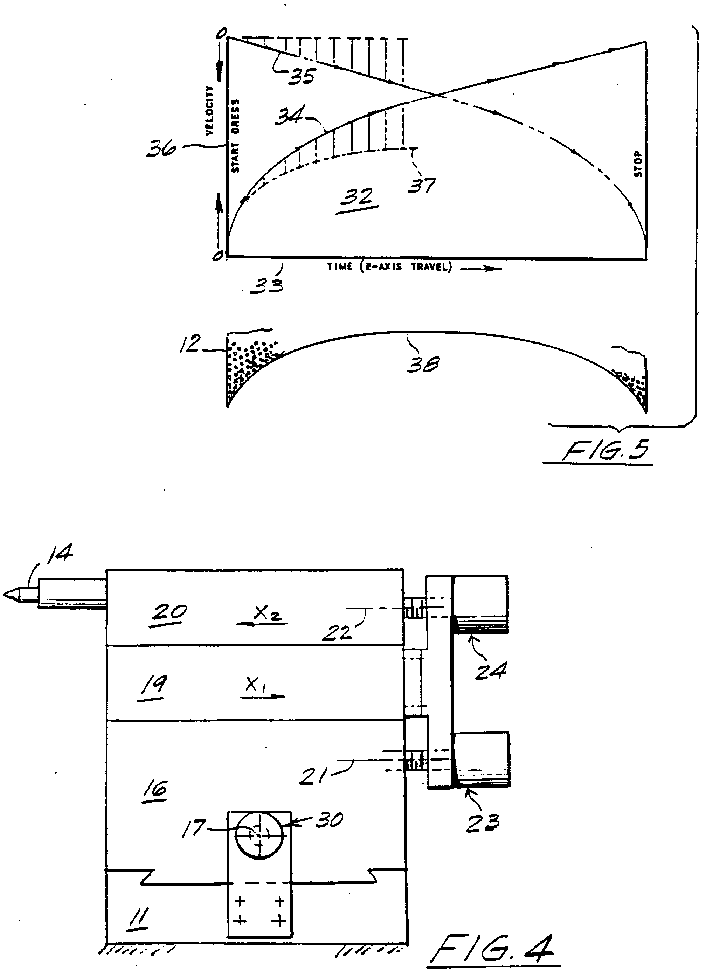

Referring to Figure 1, a grinding machine 10 has a machine base 11 which supports a grinding wheel 12 for rotation. A wheel dresser unit 13 is also mounted to the base 11, and carries a dressing tool 14, here shown as a single nib, but various tools, including diamond wheels, would be just as applicable. The tool 14 is to be moved across the peripheral face 15 of the grinding wheel 12 for the purpose of dressing a contour.

The wheel 12 depicted is for grinding a convex shape on a workpiece, not shown, but the previously mentioned U.S. patents 3,581,730, 4,051,830 and 4,071,015 depict exemplary workpieces, and those disclosures are expressly incorporated by reference herein.

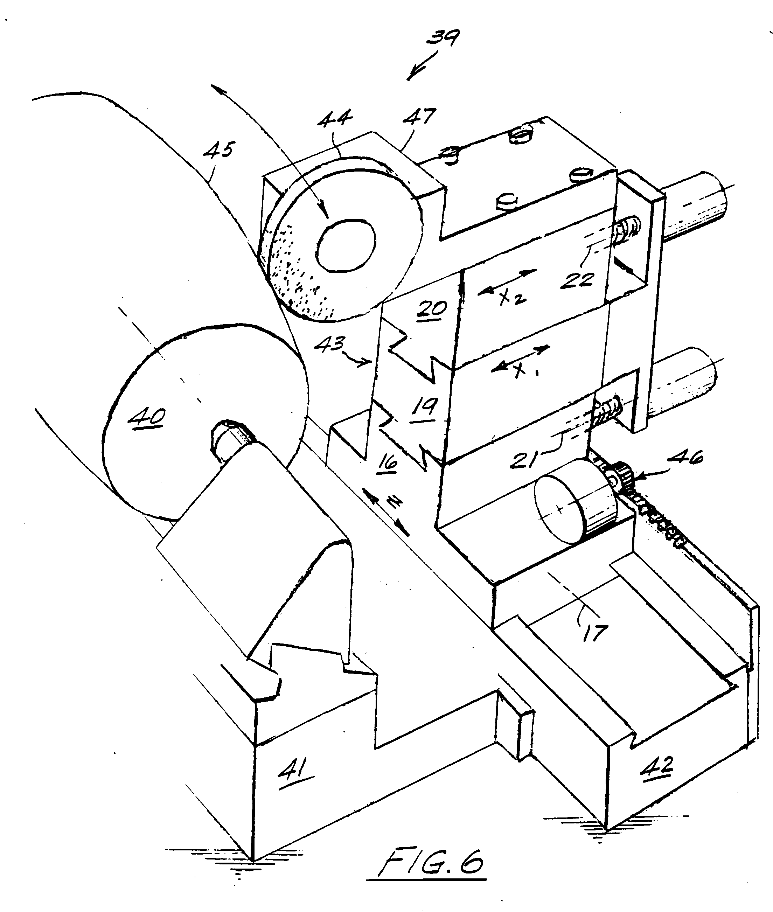

Carrier means, such as carrier slide 16, is mounted on the machine base 11 for movement along a Z-axis 17, parallel to the rotary axis 18 of the grinding wheel 12. As seen in Figure 2, the dressing tool 14 moves axially of the wheel 12 through a path length, distance "L", while the dressing tool 14 moves radially of the wheel 12, in reversing directions, to dish out the wheel face 15. To accomplish the reversing motion of the dressing tool 14, first and second slides 19, 20 are stacked on the carrier slide 16 and guided for parallel movement on an X1-axis 21 and an X2- axis 22, transverse to the Z-axis 17. As an alternative, carrier means could have moved the wheel in an axial direction to define the path length.

Independent motor drives 23, 24 are provided such that the first slide 19 is moved relative to the carrier slide 16, and the second slide 20 is dependent on, and moved relative to the first slide 19. The motor drives shown are examples only, where the first drive 23 has a motor 25 mounted to a bracket 26 of the first slide 19, driving a feed screw 27 which is threadably received in the carrier slide 16. The second drive 24 also has a motor 28 mounted to the bracket 26, driving a screw 29 which is threadably received in the second slide 20. The carrier slide drive 30 is similarly constructed.

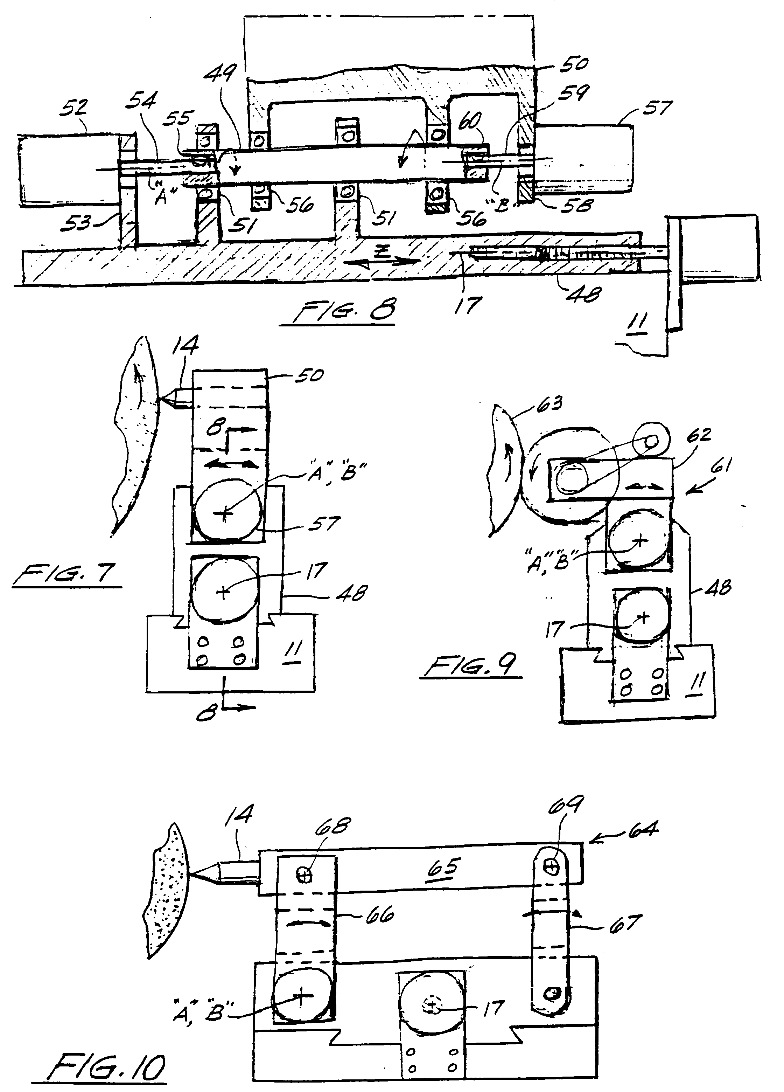

Figure 3 shows two wheels W1, W2 having flats 31a, b, c and slopes 31d, e, f, g, dressed on the wheel periphery to further illustrate the need for tool reversal, radially of the wheel, as the tool is traversed axially along the wheel.

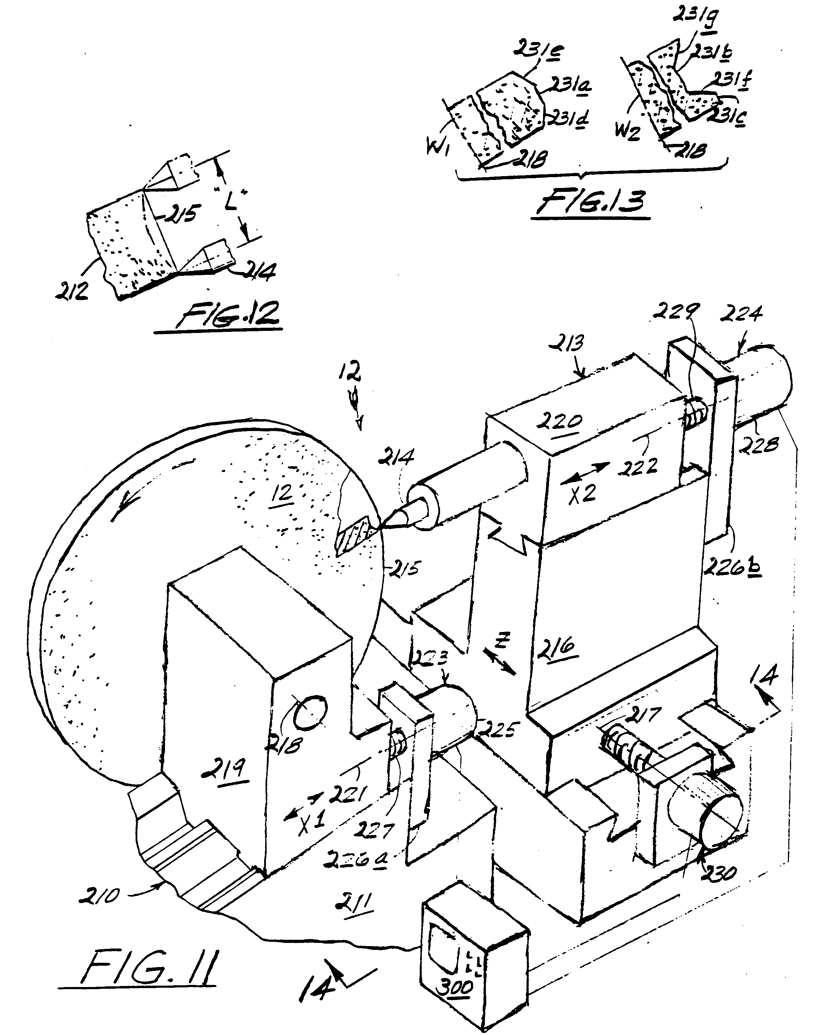

The side view of Figure 4 shows the stack of the first, second and carrier slides 19, 20, 16. The carrier slide 16 moves relative to the machine base 11; the first slide 19 is dependent-on, i.e., moves relative to, the carrier slide 16, and the second slide 20 is, in turn, dependent-on, i.e, moves relative to, the first slide 19.

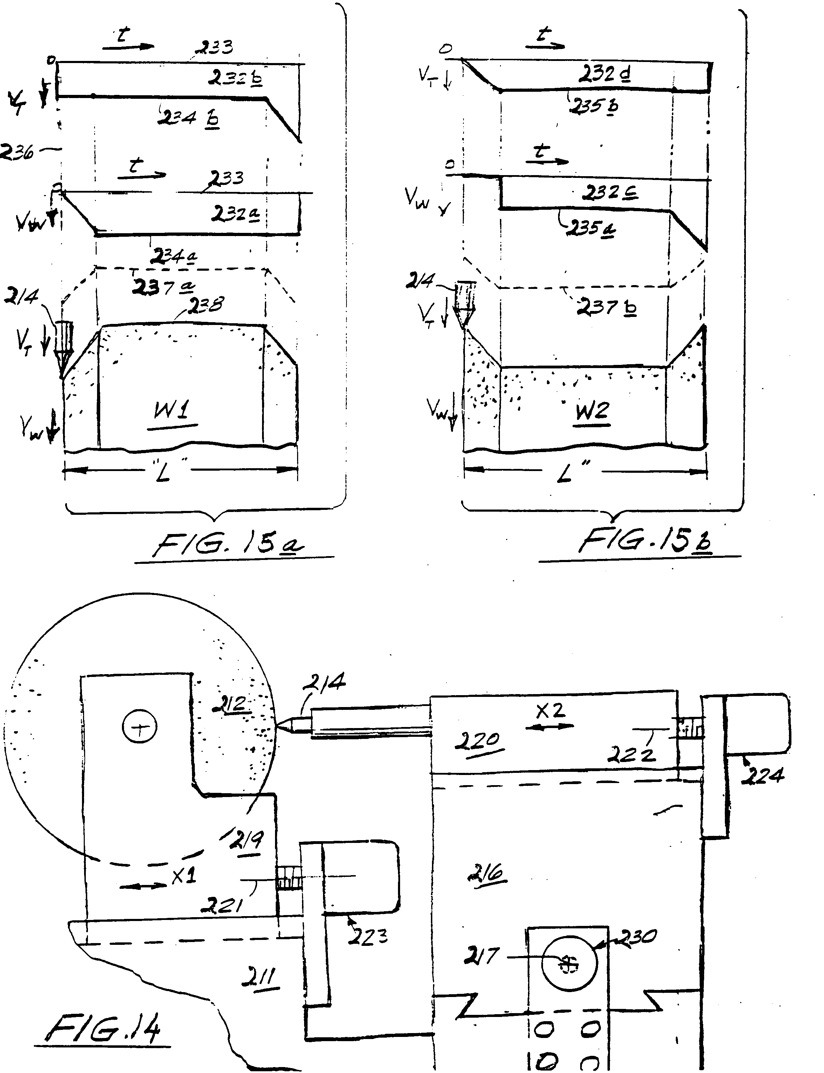

Figure 5 shows a graph 32 depicting time along the abscissa 33, corresponding to the time for a Z-axis stroke "L" (see Figure 2), and superposed velocity profile curves 34, 35 of the first and second slides 19, 20 having their velocity components plotted along the ordinate 36, in opposite directions to one another. The net difference of the curves 34, 35 is depicted by the dotted line 37, representing the path traced by the dressing tool 14. The tool path is manifested by the contour 38 cut into the wheel 12, and it will be appreciated that the contour 38 could be combinations of curves, including convex and straight portions If it is desired to dress a "flat", i.e., describing a cylindrical wheel, the first and second slides 19, 20 would be driven at the same speeds, in opposite directions, for a net difference of zero tool velocity as the carrier slide 16 is moved along the Z-axis 17. The phrase "opposite directions" is meant to include relative slide velocities of zero.

The slide drives 23, 24, 30 are governed by a suitable multi-axis control 100. Examples include: a programmable logic controller such as the ARCAMATIC APC; and, computer numerical control such as the ARCAMATIC 750G CNC, both available from Cincinnati Milacron Inc., Cincinnati, Ohio 45209.

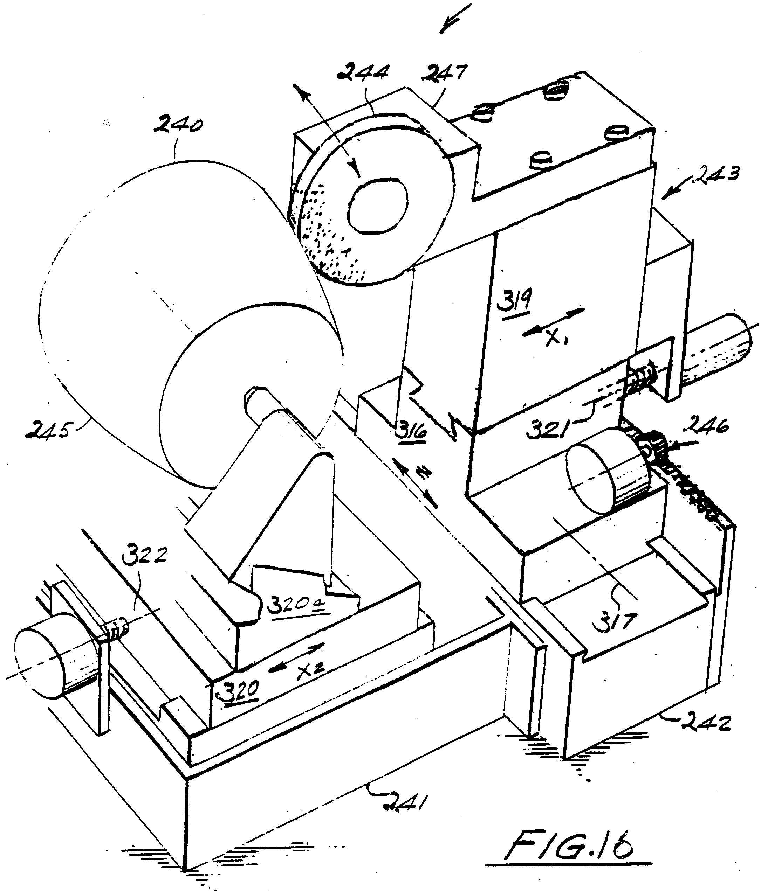

The embodiment of Figure 6 depicts a travelling wheelhead roll grinder 39, where a roll 40 is supported for rotation by a front base unit 41. A rear base unit 42 supports a wheel cambering attachment 43, used for moving the grinding wheel 44 radially of the roll 40 as the roll 40 is traversed, in order to grind the convex roll form 45. The carrier slide 16 is guided on the rear base unit 42, propelled by a rack and pinion drive 46, and carries the first and second slides 19, 20. The wheelhead 47 is mounted to the second slide 20, and the slides 19, 20 are driven in the manner described in connection with Figures 1-5. As an alternative, machines equipped with a table transverse mechanism could axially-move the roll 40 past the wheel 44.

The embodiments of Figures 7-10 relate to support systems having rotary slides.

In Figures 7 and 8, the dressing tool 14 of Figure 1 is mounted for movement along the Z-axis 17 by a carrier slide 48, guided on the machine base 11. As best seen in Figure 8, rotary first and second slides 49, 50 are coaxially coupled, pivotable about respective axes "A" and "B". The first slide 49 is depicted as a shaft-like member, axially constrained and rotatably supported in bearings 51 of the carrier slide 48. A first drive motor 52 is affixed to a bracket 53 on the carrier slide 48, having its rotatable motor shaft 54 keyed to one end 55 of the first slide 49. The second slide 50 is journalled for rotation about the first slide 49 on bearings 56 spaced between the carrier slide bearings 51. A second drive motor 57 is affixed to a bracket 58 on the second slide 50, having its rotatable motor shaft 59 keyed to the other end 60 of the first slide 49. In this manner, the second slide drive motor 57 can cause relative motion between the first and second slides 49, 50, even as the first slide 49 is rotated relative the carrier slide 48. The first and second slides 9, 50 are rotated in opposite directions during precision contouring movements of the dressing tool 14.

Figure 9 illustrates a rotary slide system 61 (see Figures 7 and 8), adapted with a grinding wheelhead 62 for crowning a roll 63 in a travelling wheelhead roll grinder. It will be readily appreciated by those skilled in the art that the rotary slide system 61 would also find utility in supporting a powered diamond roll dresser as a tool for shaping a grinding wheel.

Figure 10 depicts a further embodiment of a rotary slide system, incorporated into a four-bar linkage support system 64, where a tool mounting table 65 is introduced. Both the pivotable second slide 66 and a pivotable spaced link 67 have equal throws of their respective pin joints 68, 69, and the table 65 is secured to the pin joints 68, 69 to maintain the attitude of the table 65 and tool 14, in a well-known manner.

Referring to Figure 11, a grinding machine 210 has a machine base 211 which supports a grinding wheel 212 for rotation. A wheel dresser unit 213 is also mounted to the base 211, and carries a dressing tool 214, here shown as a single nib, but various tools, including diamond wheels, would be just as applicable. The tool 214 is to be moved across the peripheral face 215 of the grinding wheel 212 for the purpose of dressing a contour.

Carrier means, such as a carrier slide 216, is mounted on the machine base 211 for movement along a Z-axis 217, parallel to the rotary axis 218 of the grinding wheel 212. As seen in Figure 12, the dressing tool 214 moves axially of the wheel 212 through a path length, distance "L", while the dressing tool 214 moves radially of the wheel 212, in relative reversing directions, to dish out the wheel face 215. To accomplish the relative reversing motion of the dressing tool 214, the wheel 212 and dressing unit 213 are carried by respective first and second slides 219, 220. The first slide 219 is carried on the base 211, and guided for movement along an X1-axis 221, transverse to the Z-axis 217. The second slide 220 is stacked on the carrier slide 216 and guided for movement along an X2 axis, parallel to the X1 axis 221. As an alternative carrier means could have moved the wheel in an axial direction to define the path length.

Independent motor drives 223, 224 are provided such that the first slide 219 is moved relative to the base 211, and the second slide 220 is moved relative to the base 211 and carrier slide 216. The motor drives shown are examples only, where the first drive 223 has a motor 225 mounted to a bracket 226a on the base 211, driving a feed screw 227 which is threadably received in the first slide 219. The second drive 224 also has a motor 228 mounted to a bracket 226b, driving a screw 229 which is threadably received in the second slide 220. The carrier slide drive 230 is similarly constructed.

Figure 13 shows two wheels W1, W2 having flats 231a, b, c and slopes 231d, e, f, g dressed on the wheel periphery to further illustrate the need for tool reversal, radially of the wheel, as the tool is traversed axially along the wheel.

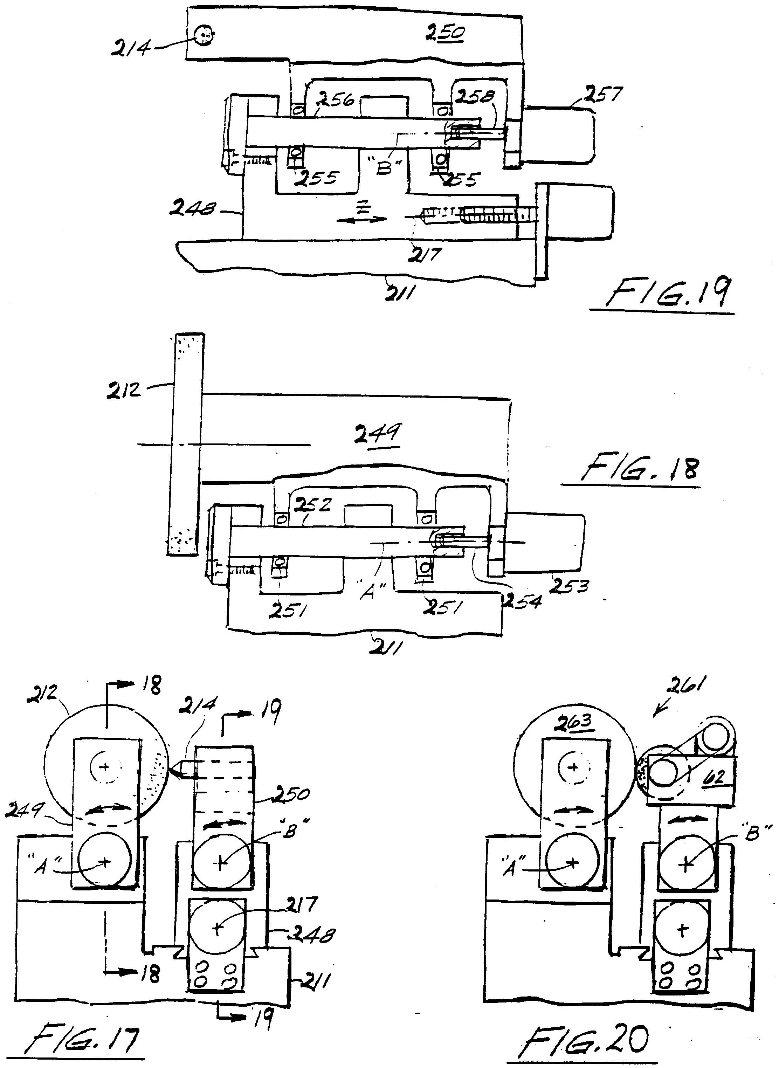

The side view of Figure 14 shows the stack of the first, second and carrier slides 219, 220, 216. The carrier slide 216 moves relative to the machine base 211; the first slide 219 is carried on the base 211 and moves relative to the carrier slide 216. The second slide 220 is, in turn, dependent on the carrier slide 216, and moves relative to the first slide 219.

Figure 15a shows simultaneous graphs 232a, b, depicting time, t, along the abscissa 233, corresponding to the time for a Z-axis stroke "L" (see Figure 12), and superposed velocity profile curves 234a, b, of the first and second slides 219, 220, having their velocity components, VT (tool) and VW (wheel), plotted along the ordinate 236, in the same directions for dressing a grinding wheel W1. The net superposed difference of the curves 234a, b is depicted by the dotted line 237a, representing the path traced by the dressing tool 214. The tool path is manifested by the contour 238 cut into the wheel 212, and it will be appreciated that the contour 238 could be many combinations of curves. If it is desired to dress a "flat" i,e. describing a cylindrical wheel, the first and second slides 219, 220 would be driven at the same speeds, in the same directions, for a net velocity difference of zero, as the carrier slide 216 is moved along the Z-axis 217. The phrase "same directions" is meant to include slide velocities of zero which may occur during the precision movement.

In a similar manner, Figure 15b shows graphs 232c, d, for velocity profile curves 235a, b and the net difference, dotted line 237b, representing the path relatively traced by the dressing tool 214 to dress wheel W2.

The slide drives 223, 224, 230 are governed by a suitable multi-axis control means 300. Examples include: a programmable logic controller such as the ACRAMATIC APC, and computer numerical control such as the ACRAMATIC 750g CNC, both available from Cincinnati Milacron Inc., Cincinnati, Ohio 45209.

The embodiment of Figure 16 depicts a special travelling wheelhead roll grinder 239, where a convexly-tapered roll 240 is rotatably supported by a front base unit 241. A rear base unit 242, affix with the front base unit 241, supports a wheel cambering attachment 243, used for moving the grinding wheel 244 radially of the roll 240 as the roll 240 is traversed, in order to grind the convex roll form 245. The attachment 243 includes a carrier slide 316, which is guided on the rear base unit 242, and propelled axially of the roll 240 by a rack and pinion drive 246, i.e., along a Z-axis 317. The carrier slide 316 supports a first slide 319 and wheelhead 247 which are movable radially of the roll 240, i.e., along an X1-axis 321, transverse to the Z-axis 317.

The front base unit 241 supports a second slide 320 which is guided to move the roll 240 in a radial direction, i.e., along an X2-axis 322, generally parallel to the X1 axis 321, since the roll 240 and its support table 320a are mounted to the second slide 320. Relative axial movement between the wheel 244 and roll 240 along the Z-axis 217 (i.e., transverse to the X1 and X2 axes) could also be accomplished by employing a sliding table under the workpiece, in a manner well-known in grinding arts.

During a precision movement, the first and second slides 319, 320 are driven in the same direction; thus, the superposed slide feed rates, variable with respect to the bases 241, 242, may effect relative precision reversing movement between the wheel 244 and roll 240.

The embodiments of Figures 17 to 22 relate to support systems having rotary slides.

In Figure 17, the dressing tool 214 of Figure 11 is mounted for movement relative to the grinding wheel 212, along the Z-axis 217, by a carrier slide 248 guided on the machine base 211. The wheel 212 is rotatably carried by a first slide 249, pivotable about an axis "A". The dressing tool 214 is carried by a second slide 250, pivotable about an axis "B", where the rotary axes, "A" and "B", are generally parallel to one another, and aligned to move the wheel 212 and dressing tool 214 transversely to the Z-axis 217. Referring to Figure 18, the first slide 249 is shown journalled, through a pair of spaced bearings 251, about a stationary support shaft 252 affixed to the base 211. A rotary motor 253 is affixed to the first slide 249, and has its shaft 254 keyed into the stationary support shaft 252, to effect rotation of the first slide 249 relative to the base 211. Referring to Figure 19, the second slide 250 is shown journalled, through a pair of spaced bearings 255, about a stationary support shaft 256 affixed to the carrier slide 248. A rotary motor 257 is affixed to the second slide 250, and has its shaft 258 keyed into the stationary support shaft 256, to effect rotation of the second slide 250 relative to the carrier slide 248. While the first and second slides 249, 250 may be reversely-pivoted about their respective axes "A" and "B", they move in the same direction during a precision move, similar to the linear slide system of Figures 11 to 16.

Figure 20 illustrates a rotary slide system 261 (see Figures 7 - 9), adapted with a grinding wheelhead 262 for crowning a roll 263 in a travelling wheelhead roll grinder. It will be readily appreciated by those skilled in the art that the rotary slide system 261 would also find utility, for example, in supporting a powered diamond roll dresser as a tool for shaping a grinding wheel.

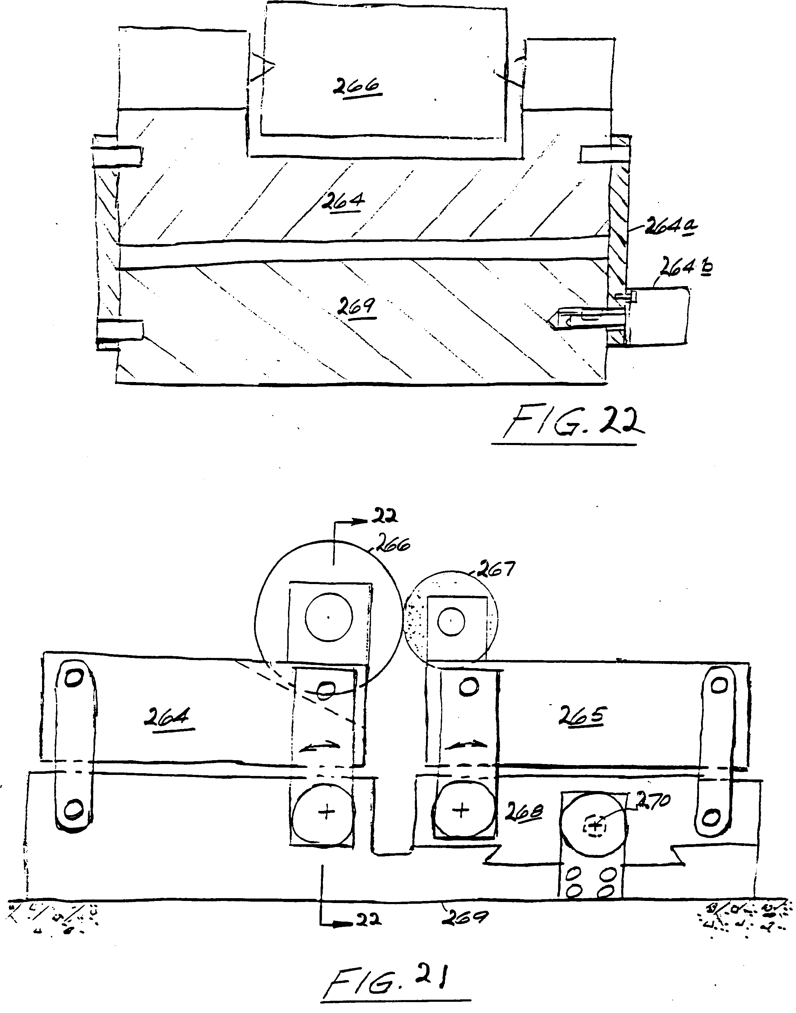

Figures 21, and 22 depict a further embodiment of a rotary slide system, incorporating a well-known four-bar linkage supports where translatable tables 264, 265 support, for example, a workpiece 266 and grinding wheel 267. The grinding wheel support table 265 is mounted to a carrier slide 268, guided for movement on the machine base 269, along a Z-axis 270. The closest links 264a, 265a at the tables 264, 265 are pivotted by respective drive means 264b, 265b, in the fashion of Figures 17 to 19.

The control means 300 is applicable to all embodiments depicted in Figures 11-22.

Many other pairs of objects may be relatively moved, through combinations of linear and rotary slides, in accordance with the teachings disclosed in this specification, without departing from the scope of the invention.

Upon completion of the precision movements described in connection with Figures 1-22, the Z-axis carrier means would be typically reversed, and all elements returned to a home position. For the trip home, several options arise, the following of which are presented by way of example, and not limitation.

1. The slides could be programmed to cause the objects to follow a different return path, out of contact with each other;

2. The contoured path could be retraced by simply reversing all slide motions, following which, a compensating increment could be applied for the next precision run;

3. A compensating increment could be applied before the trip home, to trace a second contoured path, parallel to the first, i.e., in pickfeed fashion.

In some instances, additional slides might be employed, in the discretion of the designer.

It will be appreciated by those skilled in the art that, while plain dovetail guideways have been shown, other designs for slideways may be used. For example, those having rolling elements, low friction materials, or, fluid support bearings. Further, certain constructional details have been omitted for clarity, but are deemed to be well within the ken of a machine designer.

**Claims**

1. A machine comprising two machine parts (12, 212, 40, 240, 52, 262, 266; 14, 214, 44, 244, 63, 263, 267), and drive mechanism to cause relative movement of approach between said machine parts, characterised in that said drive mechanism comprises:
   (a) first drive means (23, 223, 52, 253, 64a, 264a,) operative to cause movement of approach between said machine parts; and
   (b) second drive means (24, 224, 57, 257, 64b, 264b,) operative to cause movement of separation between said machine parts, the rate of approach between said machine parts (12, 212, 14, 214, ) being the difference between the rates of operation of said first and second drive means.

2. A machine according to Claim 1 wherein said first drive means (223, 253, 264) causes movement of a first machine member (220, 250, 265, 320) carrying one of said machine parts (214, 244, 263, 267) at a first rate, the second drive means (223, 253, 224a,) causing movement of a second machine member (219, 249, 264, 319) at a second rate.

3. A machine according to Claim 2 wherein the second machine member (19, 249, 264, 319) carries the other of said machine parts (212, 240, 262, 266), whereby the first drive means (24, 257, 264) moves said first machine part (214, 244, 263, 267) and the second drive means (223, 253, 264a) moves said second machine part (212, 240, 262, 266), said movements being in the same direction.

4. A machine according to Claim 2 wherein said second machine member (19, 49, 64) carries the first machine member (20, 50, 65) whereby the second drive means (24, 57, 64b) moves both the first and second machine members (12, 40, 62; 14, 44, 63), and the first drive means (24, 57,64b) moves only the first machine member (20, 50, 65), said movements being in opposite direction.

5. A machine according to any one of the preceding claims wherein the drive means (23, 223, 24, 224) is operative to cause linear movement of the machine members ( 19, 219, 20, 220).

6. A machine according to Claim 5 wherein said movement is substantially parallel rectilinear movement, and the machine members (19, 219, 20, 220) are slide members mounted for movement in slideways.

7. A machine according to any one of Claims 1 to 4 wherein such movement is curvilinear, and the machine members (49, 50) are mounted for movement about respective parallel axes.

8. A machine according to Claim 7 wherein said axes (A, B,) are coaxial.

9. A support system for providing precision movement between two objects (212, 240, 262, 266; 214, 244, 263, 267), for example, a tool and a workpiece, characterised by:
   a base (211);
   first (219, 249, 264, 319) and second (220, 250, 265, 320) slides, mounted to said base (211) and movable in parallel directions ($X_1$, $X_2$), said first and second slides supporting respective first (212, 240, 262, 266) and second (214, 244, 263, 267) objects;
   carrier means (216,) for moving one (214, 244, 263, 267) of said first and second objects in a direction (Z) transverse to said parallel directions ($X_1$, $X_2$);
   first (223, 253, 264a) and second (224, 254, 264b) independent drive means for moving the respective first and second slides (220, 250, 265, 320; 219, 249, 264, 319);
   third drive means (230) for actuating the carrier means (216) while at least one of the first and second slides are moving; and
   control means (300) for imparting a unidirectional movement to each of said first and second slides, in the same direction, during a precisions movement.

10. A support system for providing precision movement between two objects, for example, a tool and a workpiece, characterised by:
    a base;
    first and second slides mounted for rotary movement about a common axis, said first and second slides supportiny respective first and second objects;
    carrier means (116) for moving one of said first and second objects in a motion (Z) other than rotary movement about said common axis;
    first and second independent drive means for rotating the respective first and slides;
    third drive means (14&) for actuating said carrier means while at least one of the first and second slides are moving; and
    control means (100) for imparting a unidirectional rotation to each of said first and second slides, in the same direction, during a precision movement.

11. A method for relatively moving two objects with precision, characterised by the following steps:

(a) providing a base;

(b) mounting first and second slides on said base for relative movement;

(c) supporting respective first and second objects on said first and second slides;

(d) providing carrier means for moving one of said respective first and second objects;

(e) imparting a unidirectional movement to each of said first and second slides, in the same direction, at controlled rates;

(f) actuating said carrier means, thereby moving one of said respective first and second objects in a direction transverse to said same direction while at least one of said first and second slides are moving.

12. The method of Claim 11, wherein step (b) includes mounting said first and second slides for relative parallel linear movement.

13. The method of Claim 11, wherein step (b) includes mounting said first and second slides for rotary movement about a common axis.

14. A support system for providing precise relative movement between two objects (12, 14), for example, a tool and a workpiece, in transverse directions (X, Z), characterised by:

a base 11, relatively fixed with respect to a first object (12);

first and second slides (19, 20), coupled and movable in parallel directions ($X_1$, $X_2$), the first slide (19) movable with respect to said base (11), and the second slide (20 movable with respect to said first slide (19) said second slide (20) supporting a second object (14 for movement therewith;

carrier means (16) for moving one of the objects (14 in a direction (Z) transverse to said parallel directions ($X_1$, $X_2$);

first and second independent drive means (23, 24) for moving the respective first and second slides (19, 20);

third drive means (3 for actuating said carrier means (16; and

control means (100) for imparting a unidirectional movement to each of said first and second slides (19, 20), in opposite directions, during a precision movement.

15. A support system for providing precise relative movement between two objects (12, 14), for example, a tool and a workpiece, in transverse directions (A, B and Z), characterised by:

a base 11, relatively fixed with respect to a first object (12);

first and second slides (49, 50), coaxially coupled for rotation, the first slide (49) rotatable with respect to said base 11, and the second slide (50) rotatable with respect to said first slide (49), said second slide (50) supporting a second objection ( 14) for movement therewith;

carrier means (48) for transversely moving one of said first and second objects (14, 14);

first and second independent drive means (52, 57) for rotating the respective first and second slides (49, 50);

third drive means (30) for actuating said carrier means (48); and

control means (100) for imparting a unidirectional rotation to each of said first and second slides (49, 50), in opposite directions, during a precision movement.

16. A method for precisely moving one object relative to another, characterised by the following steps;

(a) providing a base 11 which is relatively fixed with respect to a first object ( 12);

(b) coupling first and second slides ( 19, 20) such that the first slide (19) is movable with respect to the base (11), and the second slide (20) is movable with respect to the first slide (19);

(c) supporting a second object (14 on said second slide (20);

(d) imparting a unidirectional movement to each of said first and second slides (19, 20), in opposite directions ($X_1$, $X_2$), at controlled rates; and

(e) providing, and actuating, carrier means (16) for moving one of the objects (14) in a direction (Z) transverse to said opposite directions ($X_1$, $X_2$), while said first and second slides (19, 20) are moving.

17. The method of Claim 16 wherein step (b) includes coupling said first and second slides (19, 20) for parallel linear movement.

18. The method of Claim 16 wherein step (b) includes coaxially coupling said first and second slides (49, 50) for rotary movement.

FIG. 3

FIG. 2

FIG. 1

FIG.5

FIG.4

FIG.6

FIG. 8

FIG. 7

FIG. 9

FIG. 10

FIG.12

FIG.13

FIG.11

FIG.15a

FIG.15b

FIG.14

FIG.16

214
250
256    258    257
"B"
255    255
248
≡
217
211

FIG.19

212
249
252
"A"    254    253
251    251
211

FIG.18

212    18
214    19
249    250
"A"    "B"
217
248
18    211
19

FIG.17

261
263    62
"A"    "B"

FIG.20

FIG. 22

FIG. 21